(19) Europäisches Patentamt
European Patent Office
Office européen des brevets

(11) **EP 3 276 237 B1**

(12) **EUROPEAN PATENT SPECIFICATION**

(45) Date of publication and mention
of the grant of the patent:
**27.05.2020 Bulletin 2020/22**

(51) Int Cl.:
***F16K 49/00*** *(2006.01)* ***F16K 31/04*** *(2006.01)*

(21) Application number: **17180862.9**

(22) Date of filing: **12.07.2017**

(54) **ACTUATOR COUPLING COMPONENT, ACTUATOR ASSEMBLY AND ACTUATOR VALVE ASSEMBLY**

STELLGLIEDKUPPLUNGSKOMPONENTE, STELLGLIEDBAUGRUPPE UND STELLGLIEDVENTILANORDNUNG

COMPOSANT DE COUPLAGE D'ACTIONNEUR, ENSEMBLE ACTIONNEUR ET ENSEMBLE DE SOUPAPE D'ACTIONNEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2016 CN 201620816251 U**

(43) Date of publication of application:
**31.01.2018 Bulletin 2018/05**

(73) Proprietor: **Siemens Schweiz AG**
**8047 Zürich (CH)**

(72) Inventors:
• **Sun, Shao Long**
**Beijing, 100076 (CN)**
• **Zhang, Zhi Shan**
**Beijing, 100102 (CN)**
• **Ren, Zuo Hui**
**Beijing, 100039 (CN)**

(74) Representative: **Maier, Daniel Oliver**
**Siemens AG**
**Postfach 22 16 34**
**80506 München (DE)**

(56) References cited:
**JP-U- S5 564 571      US-A1- 2003 178 064**
**US-A1- 2004 261 850**

**Description**

Technical field

The present patent application relates to the field of mechanical control, in particular to an actuator coupling component, an actuator assembly and an actuator valve assembly.

Prior art

An actuator coupling component is known from the Japanese Utility Model JP S55 64571 U. The actuator coupling component comprises a hollow shaft, having one end driven by the actuator and another end connected to a valve adapter. The hollow shaft is being capable of controlling, under a driving action of the actuator, the valve adapter. The actuator coupling component further comprises an openwork support, supported between a valve adapter and an actuator, and a heat barrier pad. The heat barrier pad has a set thickness and having a through-hole for the hollow shaft to pass through. The heat barrier pad is being located between the valve adapter and the openwork support. The hollow shaft is passing through the openwork support and the heat barrier pad before is being connected to the valve adapter. The openwork support has a first mating end face, a second mating end face, and a connecting frame which connects the first mating end face with the second mating end face. The first mating end face is fitted to the heat barrier pad. The second mating end face is fitted to the actuator. Holes for the hollow shaft to pass through are provided on the first mating end face and the second mating end face respectively.

Background art

An actuator is an apparatus in an automated technology tool, which receives control information and applies a control action to a valve adapter. In general, a coupling component is disposed between the actuator and the valve, in order to realize installation of the actuator and the valve with a positional relationship there between. Taking the example of a valve actuator, a valve actuator is a driving apparatus for driving the action of a valve, i.e. the object of control is a valve. In industrial applications, the actuator and the valve, as discrete devices, must generally be fitted using a coupling component, so as to enable them to operate in coordination with each other.

In actual applications, certain metal valve actuators may be found to be afflicted with the problem of internal rust. If the rust is sufficiently severe, it will also cause loss of the actuator's transmission function. In the southern Chinese market in particular, the problem regarding rusting and corrosion of actuators is even more pronounced.

Content of the patent application

In view of the above, the present patent application on the one hand proposes an actuator coupling component, and on the other hand proposes an actuator assembly and an actuator valve assembly, for the purpose of ameliorating the problem of rust in actuators.

An actuator coupling component proposed in the present patent application is characterized in that that side of the first mating end face which is in contact with the heat barrier pad is provided with multiple first bosses. That side of the second mating end face which is in contact with the actuator is provided with multiple second bosses.

In one embodiment, the actuator coupling component further comprises: a locking means, for establishing a locked connection between the hollow shaft and a control component of the actuator.

In one embodiment, the openwork support has an openwork side and/or an openwork mating end face, and the openwork area is 40% - 90%.

In one embodiment, the first mating end face has an openwork structure, and the second mating end face has an openwork structure.

In one embodiment, the actuator coupling component further comprises: a circlip, which is fitted round the hollow shaft, and bears against that side of the second mating end face of the openwork support on which the actuator is not located.

In one embodiment, a set thickness of the heat barrier pad is 2 - 10 mm.

In one embodiment, an opening structure capable of achieving ventilation is provided on the hollow shaft.

In one embodiment, the opening structure is through-holes arranged opposite each other or through-holes arranged in a staggered fashion.

An actuator assembly proposed in the present patent application comprises: an actuator and any one of the actuator coupling components described above.

An actuator valve assembly proposed in the present patent application comprises: an actuator assembly described above and a valve.

In one embodiment, the valve is a liquid regulator valve.

It can be seen from the solution above that since the original solid shaft is designed as a hollow shaft structure in the present patent application, the heat transfer area of the shaft can be reduced effectively. In this way, transfer of cold from the medium in the valve adapter to the actuator through the actuator coupling component can be reduced, and in turn, the effect that the temperature of the medium in the valve adapter has on the actuator can be reduced.

In addition, an opening structure capable of achieving ventilation is disposed on the hollow shaft. For instance, on condition that mechanical performance is guaranteed, through-holes arranged opposite each other or through-holes arranged in a staggered fashion are designed on the hollow shaft; dissipation of shaft heat by air can be increased, thereby reducing the shaft temperature difference, and further reducing heat transfer to the actuator by the actuator coupling component.

In addition, by providing a thick heat barrier pad, the rate of heat transfer between the valve adapter and the support can be reduced effectively.

By providing a locking device between the hollow shaft and the control component of the actuator for the purpose of establishing a locked connection there between, a heat transfer path can be added between the hollow shaft and the actuator, thereby further decreasing the rate of heat transfer between the valve adapter and the support.

Furthermore, in the case where a support is included, by designing the support as an openwork structure, the heat transfer area of the support can be reduced effectively, and the heat conduction thickness can be increased, to further reduce the effect that the temperature of the medium in the valve adapter has on the actuator.

In addition, by providing bosses on the face of the support that is in contact with the valve adapter and on the face of the support that is in contact with the actuator, the contact area between the support and the heat barrier pad and between the support and the actuator can be decreased further, so as to further reduce heat transfer to the actuator by the actuator coupling component.

Finally, by providing a circlip on the hollow shaft, and causing the circlip to bear against that side of the second mating end face of the openwork support on which the actuator is not located, drifting of the hollow shaft can be prevented.

Description of the accompanying drawings

Preferred embodiments of the present patent application are described in detail below with reference to the accompanying drawings, to give those skilled in the art a clearer understanding of the abovementioned and other features and advantages of the present patent application. Drawings:

Fig. 1 is a structural schematic diagram of an actuator assembly in an embodiment of the present patent application.

Fig. 2 is a sectional view of an actuator coupling component based on the direction I-I in Fig. 1 in an embodiment of the present patent application.

Fig. 3 is a structural schematic diagram of an openwork support in an embodiment of the present patent application.

Fig. 4 is a structural schematic diagram of a hollow shaft in an embodiment of the present patent application.

Particular embodiments

With regard to the problem of internal rust in actuators, the inventors of the present patent application have concluded after conducting analysis that since certain actuators have aluminium metal housings, and the internal transmission gears are metal gears, the thermal conductivity is good, so the temperature of an actuator is readily influenced by the temperature of the external environment and the temperature of the coupling component. For instance, taking the example of a valve actuator, if the medium temperature in the valve is low, then the temperature of the coupling component connected between the valve and the actuator will also be low, and this in turn results in the temperature of the metal gears inside the actuator being low, giving rise to a temperature difference with respect to the ambient temperature; if the temperature difference exceeds a certain value, condensation will occur, causing rust. Condensation is especially likely to occur in the hot, humid weather of southern China. Thus, in the present patent application, the inventors have considered reducing as far as possible the effect that the temperature of the medium in the valve has on the actuator, and to this end, have considered taking the coupling component as a starting point, and reducing the temperature transmission of the coupling component.

Continuing with the example of a valve actuator, at the present time, a coupling component connected between a valve and an actuator in general at least comprises a shaft. Existing shafts are generally solid shafts; such a shaft has one end connected to the actuator and driven by the actuator, and another end connected to the valve and capable of adjusting, under a driving action of the actuator, the open/closed state of the valve as well as the opening size of the valve in an open state. In one application, the actuator is disposed on the valve directly. In another application, the coupling component connected between the valve and the actuator also comprises a support frame. The support frame is supported between the actuator and the valve. For instance, in one example, the support frame consists of two parts, namely a first support frame and a second support frame. The first support frame has one end connected to the valve via a heat barrier pad, and another end connected to the second support frame; the first support frame also has a shaft sleeve which runs from end to end, for cooperating with the shaft. The second support frame is a plate-like structure, for supporting the actuator; the second support frame also has a shaft hole. In this case, the shaft passes through the shaft hole of the second support frame and the shaft sleeve of the first support frame before being connected to the valve.

To reduce the effect which the temperature of medium in the valve has on the actuator, and reduce the temperature transmission of the coupling component, in the present patent application the inventors have considered reducing the temperature effect of the valve on the coupling component.

According to the formula of Fourier's law of heat conduction, the heat conduction rate in a steady state is formula (1):

$$Q = \lambda A \frac{t_1 - t_2}{b}$$

$$(1)$$

where Q is the heat conduction rate; $\lambda$ is the thermal conductivity; A is the heat transfer cross-sectional area; t is temperature; and b is the heat conduction thickness.

According to the formula, the heat conduction rate is proportional to the thermal conductivity, the heat transfer area and the temperature difference, and inversely proportional to the heat conduction thickness.

Thus, in the present patent application, consideration may be given to designing the original solid shaft as a hollow shaft structure, to reduce the transfer of cold to the actuator. In the case where a support frame is included, the support frame may be designed as an openwork structure, to further reduce the transfer of cold to the actuator. In addition, a thick heat barrier pad may also be disposed between the valve and the actuator or between the valve and the support frame, to effectively reduce the rate of heat transfer between the valve and the support frame.

In addition, in some applications, a locking apparatus may also be added between the hollow shaft and the actuator, for the purpose of establishing a locked connection between the hollow shaft and a control component of the actuator, thereby further adding a heat transfer path from the medium in the valve to the actuator, and reducing the transfer of cold to the actuator.

In order to clarify the object, technical solution and advantages of the present patent application, the present patent application is explained in further detail below by way of embodiments.

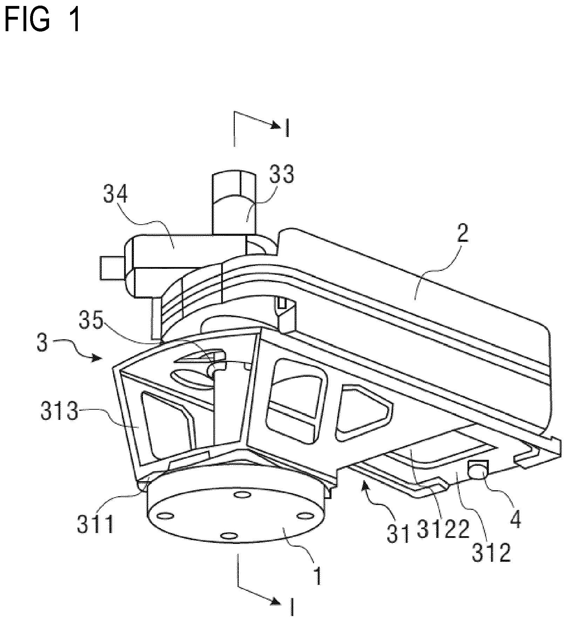

Fig. 1 is a structural schematic diagram of an actuator assembly in an embodiment of the present patent application. The actuator assembly in this embodiment may be used with a liquid regulator valve, or another regulator valve with similar demands.

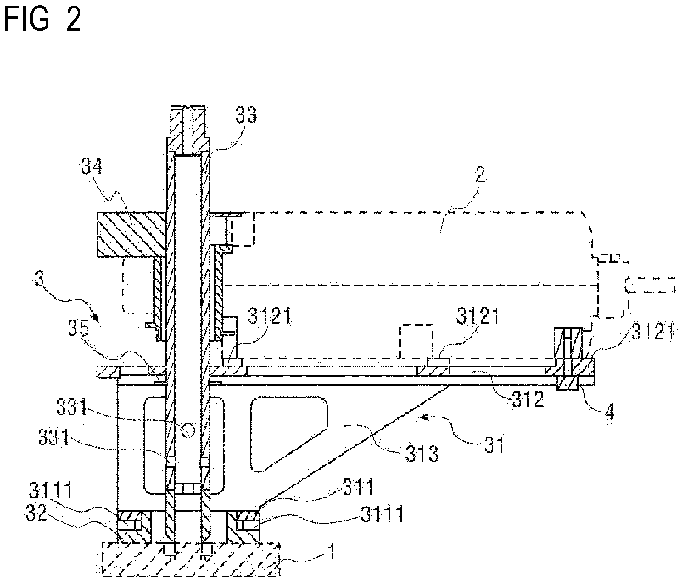

Fig. 2 is a sectional view of an actuator coupling component based on the direction I-I in Fig. 1 in an embodiment of the present patent application.

Referring to Figs. 1 and 2 together, the actuator assembly in this embodiment comprises: an actuator 2 and an actuator coupling component 3. The actuator coupling component 3 comprises: an openwork support 31, a heat barrier pad 32, a hollow shaft 33, a locking means 34 and a circlip 35.

The openwork support 31 is supported between a valve 1 and the actuator 2. The openwork support 31 may be formed by casting, or formed from sheet metal elements by welding or bolt connections. In particular implementation, the openwork support at least has an openwork side; preferably, upper and lower mating faces may also be openwork. The openwork area may reach 40% - 90%, and is preferably 80%.

In this embodiment, the openwork support 31 and valve 1 are not in direct contact with each other; a heat barrier pad 32 is used to reduce the rate of heat transfer. In the present patent application, the heat barrier pad 32 may have a thickness which meets set requirements; the range of values which may be chosen for the thickness may be 2 - 10 mm. For example, it may be 2 mm, 2.5 mm, 3 mm, 3.5 mm, 4 mm, 4.5 mm, 5 mm, ..., 10 mm, etc.

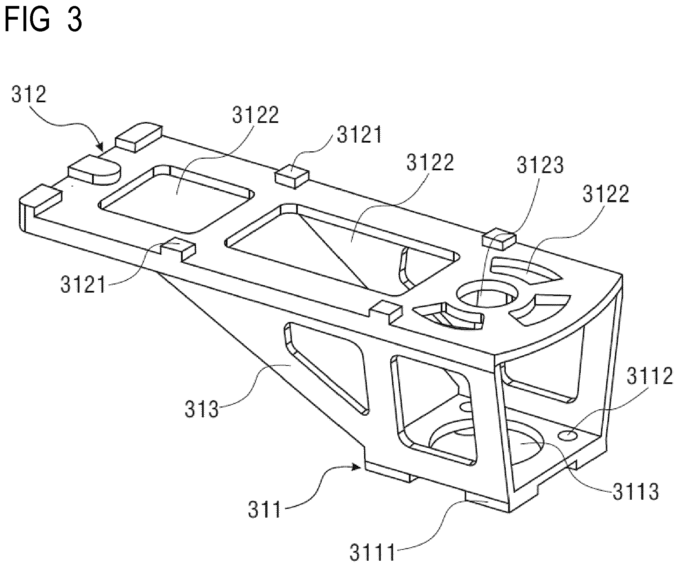

Fig. 3 is a structural schematic diagram of an openwork support in an embodiment of the present patent application. As Fig. 3 shows, the openwork support 31 may comprise: a first mating end face 311, a second mating end face 312, and a connecting frame 313 which connects the first mating end face 311 with the second mating end face 312. The connecting frame 313 may be a one-piece openwork frame, or an openwork frame formed of different connecting rods. The first mating end face 311 is fitted to the heat barrier pad 32; the second mating end face 312 is fitted to the actuator 2. For instance, in this embodiment, a screw 4 may be used to connect the second mating end face 312 to the actuator 2.

In this embodiment, that side of the first mating end face 311 which is in contact with the heat barrier pad 32 is provided with multiple first bosses 3111; that side of the second mating end face 312 which is in contact with the actuator 2 is provided with multiple second bosses 3121. In addition, the first mating end face 311 has a first openwork structure 3112 and a first hole 3113 for the hollow shaft 33 to pass through; the second mating end face 312 also has a second openwork structure 3122 and a second hole 3123 for the hollow shaft 33 to pass through.

One end of the hollow shaft 33 is driven by the actuator 2; the other end passes through the openwork support 31 and heat barrier pad 32 before being connected to the valve 1.

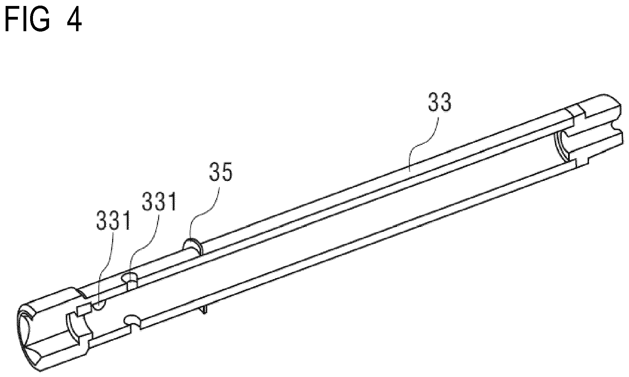

Fig. 4 shows a sectional structural schematic diagram of a hollow shaft in an embodiment of the present patent application. As Fig. 4 shows, besides having a hollow core, the hollow shaft 33 may also be provided with an opening structure 331 capable of achieving ventilation. The opening structure 331 in this embodiment may be through-holes arranged opposite each other or through-holes arranged in a staggered fashion. Of course, in other embodiments, the opening structure 331 may also take other structural forms, such as square holes or holes of some other abnormal shape.

The locking means 34 is used for establishing a locked connection between the hollow shaft 33 and a control component of the actuator 2, such that the hollow shaft 33 can be driven by the control component of the actuator 2, and thereby control the opening/closing and flow rate of the valve 1 connected to the hollow shaft 33.

The circlip 35 is fitted round the hollow shaft 33, and bears against that side of the second mating end face 312 of the openwork support 31 on which the actuator 2 is not located, to prevent drifting of the hollow shaft 33.

It can be seen from the solution above that since the support frame is designed as an openwork structure in the present patent application, the heat transfer area of the support can be decreased effectively, while the heat conduction thickness is increased; by designing the original solid shaft as a hollow shaft structure, the heat transfer area of the shaft can be decreased effectively. In this way, transfer of cold from the medium in the valve adapter to the actuator through the actuator coupling component can be reduced, and in turn, the effect that the temperature of the medium in the valve adapter has on the actuator can be reduced.

In addition, an opening structure capable of achieving ventilation is disposed on the hollow shaft. For instance, on condition that mechanical performance is guaranteed, through-holes arranged opposite each other or through-holes arranged in a staggered fashion are designed on the hollow shaft to form an openwork hollow shaft; dissipation of shaft heat by air can be increased, thereby reducing the shaft temperature difference, and further reducing heat transfer to the actuator by the actuator coupling component.

In addition, by providing a thick heat barrier pad, the rate of heat transfer between the valve adapter and the support can be reduced effectively.

By providing a locking device between the hollow shaft and the control component of the actuator for the purpose of establishing a locked connection there between, a heat transfer path can be added between the hollow shaft and the actuator, thereby further decreasing the rate of heat transfer between the valve adapter and the support.

Furthermore, by providing bosses on the face of the support that is in contact with the valve adapter and on the face of the support that is in contact with the actuator, the contact area between the support and the heat barrier pad and between the support and the actuator can be decreased further, so as to further reduce heat transfer to the actuator by the actuator coupling component.

By providing a circlip on the hollow shaft, and causing the circlip to bear against that side of the second mating end face of the openwork support on which the actuator is not located, drifting of the hollow shaft can be prevented.

Finally, by performing simulated comparison of the actuator coupling component in an embodiment of the present patent application and an actuator coupling component in a control group using a solid shaft and a non-openwork support, it can be seen that the medium in the valve has a markedly decreased effect on the actuator coupling component and on the actuator. Specific simulation conditions and results are shown below:

A valve body and an actuator are put into an incubator, and cold water is passed through the valve body. The incubator is set to have an internal environment temperature of 30°C, with a humidity of 95%, and the temperature of the cold water medium is 10°C. 4 temperature measurement points are arranged at an actuator gear, a housing, a tray and a shaft head. Testing is carried out for 3 days, and test results are recorded every hour.

Table 1 below shows a group of recorded experimental results:

Table 1

| | Environment | | Medium | Actuator temperature (°C) | | Coupling component temperature (°C) | |
|---|---|---|---|---|---|---|---|
| | Temperature (°C) | Humidity (%) | Temperature (°C) | Gear | Housing | Support | Shaft |
| Control group | 30.04 | 95 | 10 | 26.7 | 28.5 | 22.5 | 26.6 |
| Present application | 30.04 | 95 | 10 | 30 | 30 | 30 | 30 |

The test results show that when the actuator coupling component of the control group is used, the test is 27°C, and there is obvious condensation. When the actuator coupling component in an embodiment of the present patent application is used, the test is 30°C, and there is no condensation.

In addition, in the case of other embodiments, e.g. embodiments which do not include a support, in the present patent application a hollow shaft structure may likewise be used, and through-holes arranged opposite each other or through-holes arranged in a staggered fashion may also be provided on the hollow shaft, to increase dissipation of shaft heat, thereby reducing the shaft temperature difference, and further reducing heat transfer to the actuator by the actuator coupling component. Moreover, the range of values which may be chosen for the thickness of the heat barrier pad may also be 2 - 10 mm.

**Claims**

1. An actuator coupling component, comprising:

   - a hollow shaft (33), having one end in use being driven by the actuator (2) and another end connected to a valve adapter (1), the hollow shaft (33) being capable of controlling, under a driving action of the actuator (2), an action of the valve adapter (1);
   - an openwork support (31), in use being supported between the valve adapter (1) and the actuator (2);
   - a heat barrier pad (32), having a set thickness and having a through-hole for the hollow shaft (33) to pass through, the heat barrier pad (32) in use being located between the valve adapter (1) and the openwork support (31);
   - the hollow shaft (33) passing through the openwork support (31) and the heat barrier pad (32) before being connected to the valve adapter (1);
   - the openwork support (31) has a first mating end face (311), a second mating end face (312), and a connecting frame (313) which connects the first mating end face (311) with the second mating end face (312) ; wherein the first mating end face (311) is fitted to the heat barrier pad (32); the second mating end face (312) is fitted to the actuator (2); and holes (3113, 3123) for the hollow shaft (33) to pass through are provided on the first mating end face (311) and the second mating end face (312) respectively;
   **characterized in that** that side of the first mating end face (311) which is in contact with the heat barrier pad (32) is provided with multiple first bosses (3111); that side of the second mating end face (312) which in use is in contact with the actuator (2) is provided with multiple second bosses (3121).

2. The actuator coupling component as claimed in claim 1, **characterized by** further comprising: a locking means (34), for establishing a locked connection between the hollow shaft (33) and a control component of the actuator (2).

3. The actuator coupling component as claimed in claim 1 or 2, **characterized in that** the openwork support (31) has an openwork side and/or an openwork mating end face, and the openwork area is 40% - 90%.

4. The actuator coupling component as claimed in anyone of claims 1 to 3, **characterized in that** the first mating end face (311) has an openwork structure (3112), and the second mating end face (312) has an openwork structure (3122).

5. The actuator coupling component as claimed in claim 4, **characterized by** further comprising: a circlip (35), which is fitted round the hollow shaft (33), and bears against that side of the second mating end face (312) of the openwork support (31) on which the actuator is not located.

6. The actuator coupling component as claimed in any one of claims 1 to 5, **characterized in that** a set thickness of the heat barrier pad (32) is 2 - 10 mm.

7. The actuator coupling component as claimed in any one of claims 1 to 6, **characterized in that** an opening structure (331) capable of achieving ventilation is provided on the hollow shaft (33).

8. The actuator coupling component as claimed in claim 7, **characterized in that** the opening structure (331) is through-holes arranged opposite each other or through-holes arranged in a staggered fashion.

9. An actuator assembly, **characterized by** comprising: an actuator (2) and an actuator coupling component (3) as claimed in any one of claims 1 to 8.

**10.** An actuator valve assembly, **characterized by** comprising: an actuator assembly as claimed in claim 9 and a valve.

**11.** The actuator valve assembly as claimed in claim 10, **characterized in that** the valve is a liquid regulator valve.

**Patentansprüche**

**1.** Stellgliedkupplungskomponente, umfassend:

- eine Hohlwelle (33), die ein Ende, das im Gebrauch durch das Stellglied (2) angetrieben wird, und ein anderes Ende, das mit einem Ventiladapter (1) verbunden ist, aufweist, wobei die Hohlwelle (33) in der Lage ist, unter einer Antriebswirkung des Stellglieds (2) eine Aktion des Ventiladapters (1) zu steuern;
- einen durchbrochenen Träger (31), der im Gebrauch zwischen dem Ventiladapter (1) und dem Stellglied (2) gestützt wird;
- eine Wärmesperrunterlage (32), die eine eingestellte Dicke hat und ein Durchgangsloch zum Hindurchführen der Hohlwelle (33) aufweist, wobei die Wärmesperrunterlage (32) im Gebrauch zwischen dem Ventiladapter (1) und dem durchbrochenen Träger (31) positioniert ist;
- wobei sich die Hohlwelle (33) vor Verbindung mit dem Ventiladapter (1) durch den durchbrochenen Träger (31) und die Wärmesperrunterlage (32) erstreckt;
- wobei der durchbrochene Träger (31) eine erste Passendfläche (311), eine zweite Passendfläche (312) und einen Verbindungsrahmen (313), der die erste Passendfläche (311) mit der zweiten Passendfläche (312) verbindet, aufweist; wobei die erste Passendfläche (311) an der Wärmesperrunterlage (32) angebracht ist; die zweite Passendfläche (312) an dem Stellglied (2) angebracht ist; und Löcher (3113, 3123) zum Hindurchführen der Hohlwelle (33) an der ersten Passendfläche (311) bzw. der zweiten Passendfläche (312) vorgesehen sind; **dadurch gekennzeichnet, dass** die Seite der ersten Passendfläche (311), die mit der Wärmesperrunterlage (32) in Kontakt ist, mit mehreren ersten Ansätzen (3111) versehen ist und dass die Seite der zweiten Passendfläche (312), die mit dem Stellglied (2) in Kontakt ist, mit mehreren zweiten Ansätzen (3121) versehen ist.

**2.** Stellgliedkupplungskomponente nach Anspruch 1, **dadurch gekennzeichnet, dass** sie ferner Folgendes umfasst: ein Verriegelungsmittel (34) zum Herstellen einer verriegelten Verbindung zwischen der Hohlwelle (33) und einer Steuerkomponente des Stellglieds (2).

**3.** Stellgliedkupplungskomponente nach Anspruch 1 oder 2, **dadurch gekennzeichnet, dass** der durchbrochene Träger (31) eine durchbrochene Seite und/oder eine durchbrochene Passendfläche aufweist und der durchbrochene Bereich 40% - 90% beträgt.

**4.** Stellgliedkupplungskomponente nach einem der Ansprüche 1 bis 3, **dadurch gekennzeichnet, dass** die erste Passendfläche (311) eine durchbrochene Struktur (3112) aufweist und die zweite Passendfläche (312) eine durchbrochene Struktur (3122) aufweist.

**5.** Stellgliedkupplungskomponente nach Anspruch 4, **dadurch gekennzeichnet, dass** sie ferner Folgendes umfasst: einen Sicherungsring (35), der um die Hohlwelle (33) herum angebracht ist und an der Seite der Passendfläche (312) des durchbrochenen Trägers (31), auf der das Stellglied nicht positioniert ist, anliegt.

**6.** Stellgliedkupplungskomponente nach einem der Ansprüche 1 bis 5, **dadurch gekennzeichnet, dass** eine eingestellte Dicke der Wärmesperrunterlage (32) 2 - 10 mm beträgt.

**7.** Stellgliedkupplungskomponente nach einem der Ansprüche 1 bis 6, **dadurch gekennzeichnet, dass** eine Öffnungsstruktur (331), die Lüftung erreichen kann, an der Hohlwelle (33) vorgesehen ist.

**8.** Stellgliedkupplungskomponente nach Anspruch 7, **dadurch gekennzeichnet, dass** die Öffnungsstruktur (331) Durchgangslöcher, die einander gegenüber angeordnet sind, oder Durchgangslöcher, die auf versetzte Weise angeordnet sind, sind.

**9.** Stellgliedkupplungskomponente, **dadurch gekennzeichnet, dass** sie Folgendes umfasst: ein Stellglied (2) und eine Stellgliedkupplungskomponente (3) nach einem der Ansprüche 1 bis 8.

**10.** Stellgliedventilanordnung, **dadurch gekennzeichnet, dass** sie Folgendes umfasst: eine Stellgliedanordnung nach Anspruch 9 und ein Ventil.

**11.** Stellgliedventilanordnung nach Anspruch 10, **dadurch gekennzeichnet, dass** das Ventil ein Flüssigkeitsregelventil ist.

## Revendications

**1.** Composant de couplage d'un actionneur, comprenant :

- un arbre creux (33), présentant une extrémité entraînée, en cours d'utilisation, par l'actionneur (2) et une autre extrémité raccordée à un adaptateur de vanne (1), l'arbre creux (33) étant capable de commander, sous une action d'entraînement de l'actionneur (2), une action de l'adaptateur de vanne (1) ;
- un support ajouré (31), étant supporté en cours d'utilisation entre l'adaptateur de vanne (1) et l'actionneur (2) ;
- un tampon à barrière thermique (32), présentant une épaisseur établie et présentant un orifice passant pour que l'arbre creux (33) passe à travers, le tampon à barrière thermique (32) étant situé, en cours d'utilisation, entre l'adaptateur de vanne (1) et le support ajouré (31) ;
- l'arbre creux (33) passant à travers le support ajouré (31) et le tampon à barrière thermique (32) avant d'être raccordé à l'adaptateur de vanne (1) ;
- le support ajouré (31) présente une première face d'extrémité d'adaptation (311), une seconde face d'extrémité d'adaptation (312), et un cadre de raccordement (313) qui relie la première face d'extrémité d'adaptation (311) à la seconde face d'extrémité d'adaptation (312) ; dans lequel la première face d'extrémité d'adaptation (311) est fixée sur le tampon à barrière thermique (32) ; la seconde face d'extrémité d'adaptation (312) est fixée sur l'actionneur (2) ; et les orifices (3113, 3123) pour que l'arbre creux (33) passe à travers sont ménagés sur la première face d'extrémité d'adaptation (311) et la seconde face d'extrémité d'adaptation (312) respectivement ; **caractérisé en ce que** le côté de la première face d'extrémité d'adaptation (311) qui est en contact avec le tampon à barrière thermique (32) est doté de multiples premiers bossages (3111) ; le côté de la seconde face d'extrémité d'adaptation (312) qui, en cours d'utilisation, est en contact avec l'actionneur (2) est doté de multiples seconds bossages (3121).

**2.** Composant de couplage d'un actionneur selon la revendication 1, **caractérisé en ce qu'**il comprend en outre : un système de verrouillage (34), permettant d'établir une connexion verrouillée entre l'arbre creux (33) et un composant de commande de l'actionneur (2).

**3.** Composant de couplage d'un actionneur selon la revendication 1 ou 2, **caractérisé en ce que** le support ajouré (31) présente un côté ajouré et/ou une face d'extrémité d'adaptation ajourée, et la zone ajourée représente 40 % à 90 %.

**4.** Composant de couplage d'un actionneur selon l'une quelconque des revendications 1 à 3, **caractérisé en ce que** la première face d'extrémité d'adaptation (311) présente une structure ajourée (3112), et la seconde face d'extrémité d'adaptation (312) présente une structure ajourée (3122).

**5.** Composant de couplage d'un actionneur selon la revendication 4, **caractérisé en ce qu'**il comprend en outre : un circlip (35), qui est adapté autour de l'arbre creux (33), et s'appuie contre le côté de la seconde face d'extrémité d'adaptation (312) du support ajouré (31) sur lequel l'actionneur n'est pas situé.

**6.** Composant de couplage d'un actionneur selon l'une quelconque des revendications 1 à 5, **caractérisé en ce qu'**une épaisseur établie du tampon à barrière thermique (32) est comprise entre 2 et 10 mm.

**7.** Composant de couplage d'un actionneur selon l'une quelconque des revendications 1 à 6, **caractérisé en ce qu'**une structure d'ouverture (331) capable de réaliser une ventilation est ménagée sur l'arbre creux (33).

**8.** Composant de couplage d'un actionneur selon la revendication 7, **caractérisé en ce que** la structure d'ouverture (331) est constituée d'orifices passants disposés à l'opposé les uns des autres ou d'orifices passants disposés de manière décalée.

**9.** Ensemble actionneur, **caractérisé en ce qu'**il comprend : un actionneur (2) et un composant de couplage d'actionneur (3) selon l'une quelconque des revendications 1 à 8.

10. Ensemble de vanne d'actionneur, **caractérisé en ce qu'**il comprend : un ensemble actionneur selon la revendication 9 et une vanne.

11. Ensemble de vanne d'actionneur selon la revendication 10, **caractérisé en ce que** la vanne est un régulateur de liquide.

FIG 1

FIG 2

FIG 3

FIG 4

**REFERENCES CITED IN THE DESCRIPTION**

**Patent documents cited in the description**

- JP S5564571 U